Europäisches Patentamt

(19) European Patent Office

Office européen des brevets

(11) Publication number: **0 113 054**
**B1**

(12) **EUROPEAN PATENT SPECIFICATION**

(45) Date of publication of patent specification: **04.02.87**

(51) Int. Cl.⁴: **F 16 L 21/08, F 16 L 27/00**

(21) Application number: **83111991.2**

(22) Date of filing: **30.11.83**

(54) Boltless restrained pipe joint.

(30) Priority: **03.01.83 US 455037**

(43) Date of publication of application:
**11.07.84 Bulletin 84/28**

(45) Publication of the grant of the patent:
**04.02.87 Bulletin 87/06**

(84) Designated Contracting States:
**CH DE FR GB IT LI**

(56) References cited:
**AT-B- 350 860**
**DE-B-2 162 435**
**FR-A-2 156 956**
**US-A-3 698 744**

(73) Proprietor: **AMSTED Industries Incorporated**
**3700 Prudential Plaza**
**Chicago, IL. 60601 (US)**

(72) Inventor: **Peting, Robert G.**
**c/o Amsted Industries Inc. 3700 Prudential Plaza**
**Chicago, III. 60601 (US)**

(74) Representative: **Dipl.-Ing. H. Hauck Dipl.-Phys.**
**W. Schmitz Dipl.-Ing. E. Graalfs Dipl.-Ing. W.**
**Wehnert Dr.-Ing. W. Döring**
**Mozartstrasse 23**
**D-8000 München 2 (DE)**

Courier Press, Leamington Spa, England.

## Description

The present invention relates to a pipe joint as defined in the introductory part of claim 1.

A pipe joint of this type is shown in US—A—3698744. In such pipe joint the first holding means is comprised of a holding portion integral with and extending radially inwards from an annular skirt portion. The second holding means comprises a plurality of circumferentially spaced lugs integral with said skirt portion and extending radially inwards therefrom. These lugs cooperate with a plurality of circumferentially spaced lugs forming said lip means and extending radially outwards from an axial end portion of the bell mouth. The lip means of the bell mouth and the second holding means of the restraining ring assembly form a twist-lock-type connection to prevent separation of the bell mouth and the spigot.

It is an object of the present invention to provide a bolt-less pipe joint which permits limited longitudinal axial misalignment of the spigot and bell mouth while at the same time providing a lock preventing lengthwise axial separation of the joint, which bolt-less pipe joint is of such a structure that it avoids a twist-lock-type connection. The present invention which solves this object is defined in claim 1.

In the pipe joint of the present invention no twist-lock-type connection is required due to the annular lip, the snap-ring and the composite type of restraining ring assembly.

With reference to the accompanying drawing which is a cross-sectional view of a pipe-joint (showing the maximum misaligned position of the pipe joint in phantom lines) an embodiment of the present invention will be described in further detail.

Referring now to the drawing, there is shown a joint 10 including a spigot 11 and a bell mouth 13 receiving the spigot 11. As shown, the bell mouth 13 is generally bell shaped and includes a lower annular ledge 14 from which there projects a bell housing 16 terminating at its free end in an annular laterally projecting lip 17. The interior wall of housing 16 is provided with an annular groove 18 which is adapted to receive a gasket 20.

The gasket 20 is made from a resilient compressible material such as rubber and/or synthetic material. The gasket 20 is placed in the annular groove 18 so that when the spigot 11 is inserted into the bell mouth the gasket 20 is compressed within the annular groove 18 to provide a seal.

Fixed to the spigot 11 as by welding or the like is an annular ring 21. The annular ring 21 is of generally rectangular cross-section and serves as a stop for a retainer sleeve or ring 22 of a restrainer assembly 50.

The restraining assembly 50 serves to hold the spigot 11 and bell mouth 13 from separating. As shown the assembly 50 includes a retainer ring 52 and a ring sleeve 53. The restraining assembly is provided with an inner annular wall 54 of somewhat larger diameter than the outer diameter of the spigot 11 so as to permit limited rocking movement of the ring 52 relative to the spigot 11 as more fully to be explained hereinafter. Extending from the inner wall 54 is a concave arcuate, preferrably spherical surface 56 which engages the upper outer corner of the ring 21 fixed to the spigot 11.

The retainer sleeve 53 is coaxially disposed about the retainer ring 52 and includes an inwardly directed annular flange 57 on one end. The flange is adapted to underlie the lip 17 on the bell mouth 13 as shown. Seated in a peripheral groove 60 provided on the inner wall of the sleeve 53 is a snap ring 58. The snap ring 58 overlies the retaining ring 52 and engages the exposed surface 59 thereof so as to hold the concave or spherical surface 56 in firm engagement with the ring 21 and the flange 57 in underlying engagement with the lip 17. In this manner the spigot 11 and bell mouth 13 are held locked against axial separation.

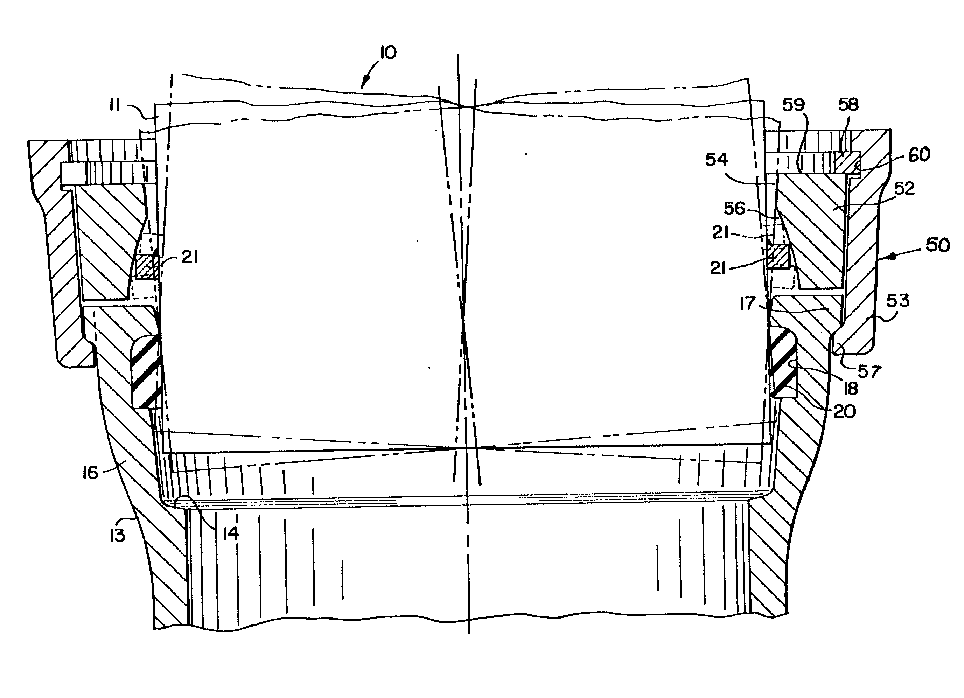

Should the spigot 11 and bell mouth 13 be out of axial alignment as shown in phantom line (Fig. 2) the ring 21 continues to bear against the arcuate surface 56. At the same time the snap ring 58 overlying the retaining ring 52 is also operative to retain the flange 57 of the sleeve 53 in firm engagement beneath the lip 17 so that the spigot and bell mouth are restrained against axial separation.

## Claims

1. A pipe joint comprising,
   a bell mouth (13) including radially extending lip means (17),
   a spigot (11) inserted into said bell mouth (13),
   a compressible sealing gasket (20) disposed about said spigot end and seated within a groove (18) in said bell mouth (13),
   a ring (21) fixed to said spigot (11),
   an annular restraining ring assembly (50) disposed about said spigot (11) and having a concave inner surface (56) engageable with said spigot ring (21), said restraining ring assembly (50) including first holding means (52, 58) including said concave surface (56) engaging said spigot ring (21), and second holding means (57) formed thereon and underlying said lip means (17) on said bell mouth (13), the first and second holding means thereby restraining said spigot (11) and bell mouth (13) against lengthwise separation,
   characterized in that
   said lip means comprises an annular lip (17), in that said first (52, 58) holding means includes a snap ring (58), in that said restraining ring assembly (50) comprises an inner restraining ring (52) and an outer sleeve (53) having said second holding means (57) formed thereon as an annular flange, and in that said snap ring (58) is seated in a groove (60) provided in said outer sleeve (53), said snap ring (58) engaging said inner restraining ring (52) to maintain said concave surface (56) in engagement with said spigot ring (21) and maintain said second holding means (57) in underlying relationship with said lip (17).

2. The pipe joint as defined in claim 1, characterized in that said concave surface (56) comprises a spherical surface.

## Patentansprüche

1. Rohrverbindung mit einer glockenförmigen Aufnahme (13), die radial verlaufende lippenartige Mittel (17) umfaßt, einem Zapfen (11), der in die glockenförmige Aufnahme (13) eingesetzt ist, einer komprimierbaren Dichtung (20), die um das Zapfenende herum angeordnet ist und in einer Nut (18) in der glockenförmigen Aufnahme (13) sitzt, einem Ring (21), der an dem Zapfen (11) befestigt ist, einer ringförmigen Halteringanordnung (50), die um den Zapfen (11) herum angeordnet ist, und eine am Zapfenring (21) angreifende konkave Innenfläche (56) aufweist, wobei die Halteringanordnung (50) erste Haltemittel (52, 58), die die am Zapfenring (21) angreifende konkave Innenfläche (56) umfassen, sowie daran angeformte zweite Haltemittel (57) aufweist, die die lippenartigen Mittel (17) an der glockenförmigen Aufnahme (13) untergreifen, derart, daß die ersten und zweiten Haltemittel den Zapfen (11) und die glockenförmige Aufnahme (13) gegen eine Trennung in Längsrichtung sichern, dadurch gekennzeichnet, daß die lippenartigen Mittel aus einer ringförmigen Lippe (17) bestehen, daß die ersten (52, 58) Haltemittel einen Schnappring (58) umfassen, daß die Halteringanordnung (50) einen inneren Haltering (52) und eine äußere Hülse (53) aufweist, an der die zweiten Haltemittel (57) als Ringflansch angeformt sind, und daß der Schnappring (58) in einer Nut (60) sitzt, die an der äußeren Hülse (53) vorgesehen ist, wobei der Schnappring (58) an dem inneren Haltering (52) angreift, um die konkave Innenfläche (56) in Anlage mit dem Zapfenring (21) zu halten und die zweiten Haltemittel (57) in ihrer die Lippe (17) untergreifenden Stellung halten.

2. Rohrverbindung nach Anspruch 1, dadurch gekennzeichnet, daß die konkave Innenfläche (56) als sphärische Fläche ausgebildet ist.

## Revendications

1. Raccord de tubes comprenant:
— une extrémité femelle de tube (13), en forme de tulipe et présentant une lèvre (17) s'étendant radialement,
— une extrémité mâle de tube (11) insérée dans ladite extrémité femelle,
— un joint d'étanchéité compressible (20) placé autour de ladite extrémité mâle et maintenu dans une rainure (18) de ladite extrémité femelle (13),
— un anneau (21) fixé sur ladite extrémité mâle (11),
— un ensemble annulaire de maintien (50) placé autour de ladite extrémité mâle (11) et comportant une surface intérieure concave (56) susceptible de venir en contact avec ledit anneau (21) de l'extrémité mâle, cet ensemble annulaire de maintien (50) comprenant des premiers moyens de maintien (52, 58) qui incluent ladite surface concave qui vient en contact avec l'anneau (21) de l'extrémité mâle, et des seconds moyens de maintien (57) formés sur les premiers et recouvrant ladite lèvre (17) de l'extrémité femelle en forme de tulipe (13), les premiers et seconds moyens de maintien maintenant ainsi lesdites extrémités en empêchant leur séparation dans le sens longitudinal, caractérisé en ce que ladite lèvre comprend une lèvre de forme annulaire, lesdits premiers moyens de maintien comprennent un circlip (58), l'ensemble annulaire de maintien (50) comprend un anneau de maintien intérieur (52) et un manchon extérieur (53) sur lequel sont formés les seconds moyens de maintien (57) et constituant un bourrelet annulaire, et ledit circlip (58) est logé dans une rainure (60) prévu dans ledit manchon extérieur (53), ledit circlip (58) venant en contact avec ledit anneau de maintien intérieur (52) pour maintenir ladite surface concave (56) en contact avec ledit anneau (21) de l'extrémité mâle, et pour maintenir lesdits seconds moyens de maintien (57) en situation de recouvrement par rapport à ladite lèvre (17).

2. Raccord de tubes selon la revendication 1, caractérisé en ce que ladite surface concave (56) comprend une surface sphérique.